# EUROPEAN PATENT APPLICATION

(11) **EP 4 808 181 A1**
(43) Date of publication of application: **16.09.2026**
(21) Application number: 24889207.7
(22) Date of filing: 11.11.2024
(51) Int. Cl.: H04W 12/106, H04W 12/041, H04W 12/047, H04W 84/12, H04W 12/04, H04L 1/1607, H04L 1/1829, H04L 1/1812, H04W 12/0471

(54) **METHOD AND DEVICE FOR SUPPORTING PROTECTION OF CONTROL FRAME IN WIRELESS LAN SYSTEM**

(30) Priority: 09.11.2023 KR 20230154820; 09.01.2024 KR 20240003690; 02.10.2024 KR 20240134040
(71) Applicant: LG Electronics Inc., Yeongdeungpo-gu Seoul 07336 (KR)
(72) Inventor: BAEK, Sunhee, Seoul 06772 (KR); CHOI, Jinsoo, Seoul 06772 (KR); JANG, Insun, Seoul 06772 (KR); KIM, Geonhwan, Seoul 06772 (KR); YOON, Yelin, Seoul 06772 (KR); CHA, Dongju, Seoul 06772 (KR)
(74) Representative: Plasseraud IP
(86) International application number: PCT/KR2024/017734
(87) International publication number: WO 2025/101021

(57) **Abstract**

Disclosed are a method and a device for supporting protection of a control frame in a wireless LAN system. A method performed by a first STA in a wireless local area network (WLAN) system according to an embodiment of the present disclosure may comprise the steps of: identifying key information related to protection of a block-ACK frame; receiving, from a second STA, the block-ACK frame to which the protection is applied; and performing integrity checking on the block-ACK frame on the basis of the key information. Here, on the basis that the block-ACK frame is indicated as a block-ACK type for multiple STAs, protection-related information for the integrity checking may be included in each specific TID AID information field among multiple respective TID AID information fields included in a block-ACK information field in the block-ACK frame.

## Description

### [Technical Field]

The present disclosure relates to a method and device for supporting protection for a control frame in a wireless local area network (WLAN) system.

### [Background]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device supporting protection for a control frame in a WLAN system.

A technical object of the present disclosure is to provide a method and a device for supporting an integrity check based on a broadcast/multicast integrity protocol (BIP) for a block-ACK (BlockACK, BA) frame in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may include confirming key information related to protection for a block-acknowledgement (block-ACK) frame; receiving a block-ACK frame to which the protection is applied from a second STA; and based on the key information, performing an integrity check on the block-ACK frame. Here, based on the block-ACK frame being indicated as a block-ACK type for a multi-STA, protection-related information for the integrity check may be included in a specific Per TID AID Info field among a plurality of Per TID AID Info fields included in a block-ACK information field within the blockACK frame.

A method performed by a second station (STA) in a wireless local area network (WLAN) system according to an additional aspect of the present disclosure may include confirming key information related to protection for a block-ACK frame; based on the key information, configuring a block-ACK frame including protection-related information for an integrity check on the block-ACK frame; and transmitting a block-ACK frame to which the protection is applied to a first STA. Here, based on the block-ACK frame being indicated as a block-ACK type for a multi-STA, the protection-related information may be included in a specific Per TID AID Info field among a plurality of Per TID AID Info fields included in a block-ACK information field within the block-ACK frame.

### [Technical Effects]

According to various embodiments of the present disclosure, a method and device supporting protection for a control frame in a wireless LAN system may be provided.

According to various embodiments of the present disclosure, a method and a device for supporting a BIP-based integrity check for a block-ACK (BlockAck, BA) frame in a WLAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram representing an exemplary format of a block-ACK frame to which the present disclosure may be applied.
FIG. 9 illustrates an example of a BIP MMPDU format that may be applied to the present disclosure.
FIG. 10 illustrates an example of a protection information field/subfield format according to an embodiment of the present disclosure.
FIG. 11 represents an example of a block-ACK frame configuration supporting an integrity check according to an embodiment of the present disclosure.
FIG. 12 represents another example of a block-ACK frame configuration supporting an integrity check according to an embodiment of the present disclosure.
FIG. 13 represents another example of a block-ACK frame configuration supporting an integrity check according to an embodiment of the present disclosure.
FIG. 14 represents another example of a block-ACK frame configuration supporting an integrity check according to an embodiment of the present disclosure.
FIG. 15 illustrates the operation of a transmitting STA supporting an integrity check for a block-ACK frame according to the present disclosure.
FIG. 16 illustrates the operation of a receiving STA supporting an integrity check for a block-ACK frame according to the present disclosure.
FIG. 17 is a diagram for describing an example of a method performed by the first STA according to the present disclosure.
FIG. 18 is a diagram for describing an example of a method performed by the second STA according to the present disclosure.

### [Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

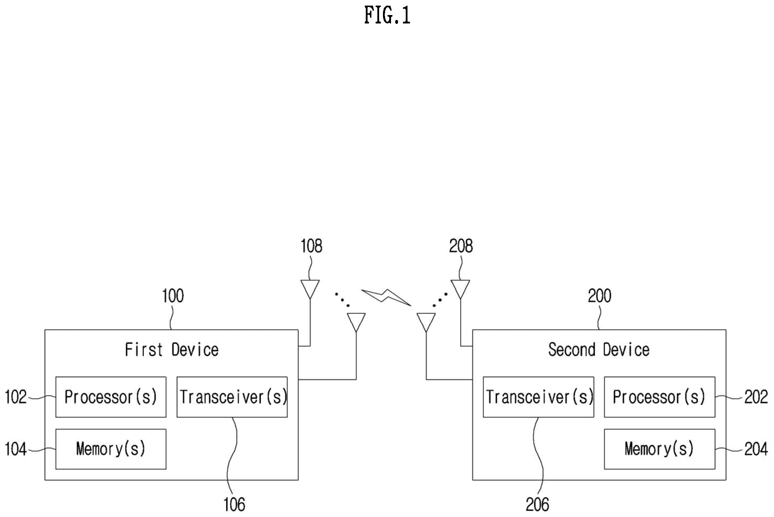

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomousdriving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

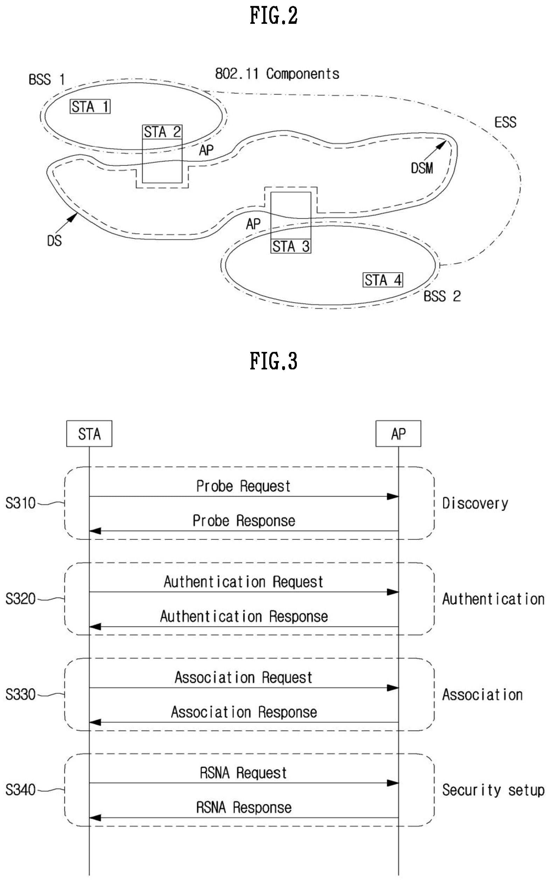

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same manner. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

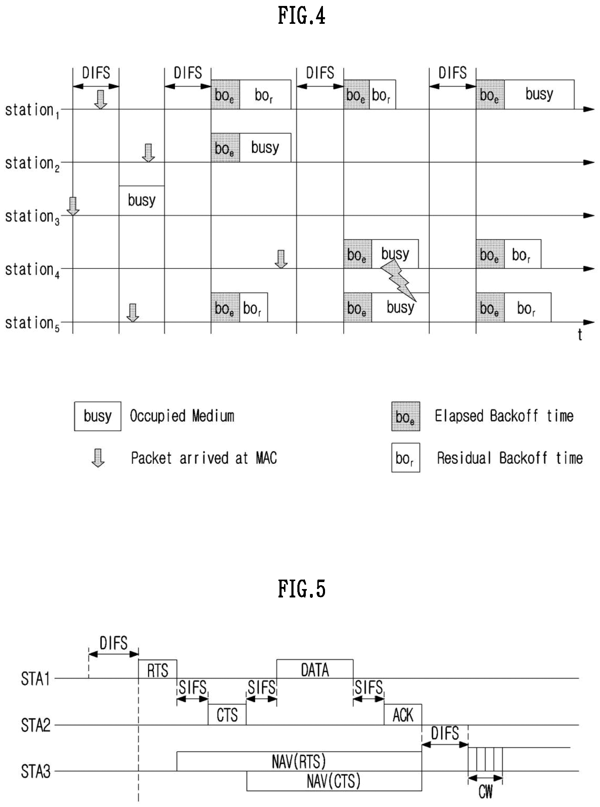

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

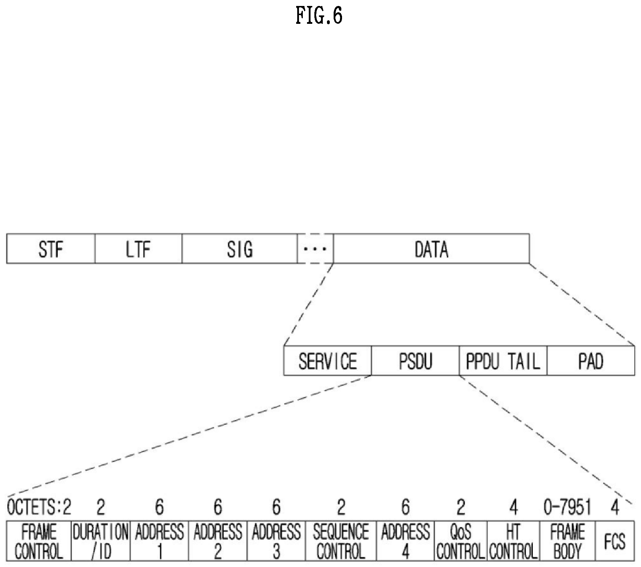

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

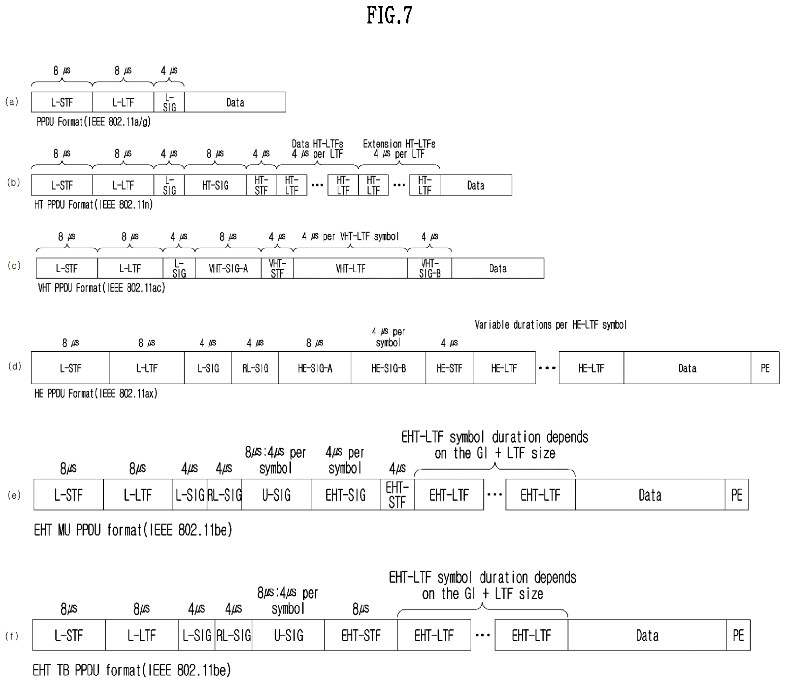

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Block-ACK (BlockACK, BA) Frame

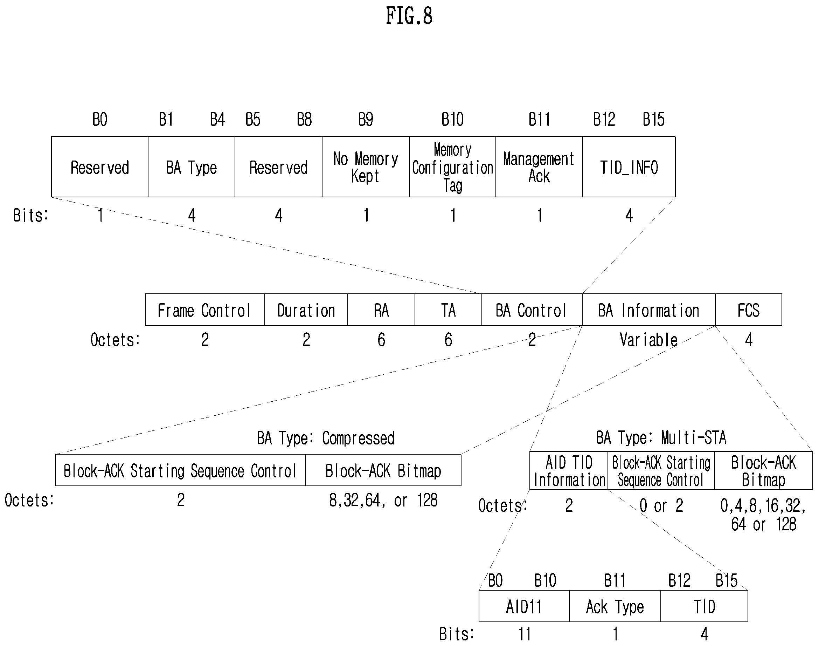

FIG. 8 is a diagram representing an exemplary format of a block-ACK frame to which the present disclosure may be applied.

A block-ACK (BlockAck, BA) mechanism is a method for increasing channel efficiency by including a plurality of confirmation responses in one frame and transmitting them. For example, the first STA (e.g., an AP) may request a reception result for multiple MPDUs through a block-ACK request frame, and the second STA(s) that receive a block-ACK request frame may transmit a block-ACK frame including an confirmation response for multiple MPDUs based on a corresponding request.

As illustrated in FIG. 8, a block-ACK frame may include a BA control field and a BA information field in a frame body.

A BA control field may include a BA type indicating the type of a block-ACK frame (e.g., compressed, multi-STA, etc.), management ACK information, TID information (TID_INFO), etc.

A BA information field may be based on the type of a block-ACK frame (i.e., a block-ACK frame variant type) indicated by a BA type field/subfield within BA control information.

For example, when a compressed block-ACK frame type is indicated, a BA information field format corresponding to compressed block-ACK may include a block-ACK starting sequence control field and a block-ACK bitmap field.

In this regard, the fragment number subfield of a block-ACK starting sequence control field may be defined as shown in Table 1 below.

**[Table 1]**

| **Fragment Number Subfield** | | | **Fragment Level 3 (on/off)** | **Block-ACK Bitmap Subfield Length (Octet)** | **Maximum Number of MSDUs/A-MSDUs that may be confirmed** |
|---|---|---|---|---|---|
| **B3** | **B2-B1** | **B0** | | | |
| 0 | 0 | 0 | Off | 8 | 64 |
| 0 | 1 | 0 | | Reserved | Reserved |
| 0 | 2 | 0 | | 32 | 256 |
| 0 | 3 | 0 | | Reserved | Reserved |
| 0 | 0 | 1 | On | 8 | 16 |
| 0 | 1 | 1 | | Reserved | Reserved |
| 0 | 2 | 1 | | 32 | 64 |
| 0 | 3 | 1 | | Reserved | Reserved |
| 1 | 0 | 0 | Off | 64 | 512 |
| 1 | 1 | 0 | | 128 | 1024 |
| 1 | 2 or 3 | 0 | | Reserved | Reserved |
| 1 | Any | 1 | | Reserved | Reserved |

Referring to Table 1, when a compressed block-ACK frame is transmitted to a non-HE STA or is transmitted from a non-HE STA, the fragment number subfield of a block-ACK starting sequence control field may be set as a value of 0.

When the B0 bit of a fragment number subfield is 0 and a B3 bit is 0, the block-ACK bitmap subfield of the BA information field of a compressed block-ACK frame may represent the reception status of up to 64 or 256 MSDUs and/or A-MSDUs according to the B2-B1 bit values of a fragment number subfield indicated in Table 1. When the B0 bit of a fragment number subfield is 0 and the B3 bit of a fragment number subfield is 1, the block-ACK bitmap subfield of the BA information field of a compressed block-ACK frame may represent the reception status of up to 512 or 1024 MSDUs and/or A-MSDUs according to the B2-B1 bit values of a fragment number subfield as indicated in Table 1. Each bit which is the same as 1 in a compressed block-ACK bitmap subfield confirms the reception of a single MSDU or A-MSDU in sequence number order, and the first bit of a block-ACK bitmap subfield may correspond to an MSDU (or its fragment) or an A-MSDU (or its fragment) with a sequence number matching the starting sequence number subfield of a block-ACK starting sequence control subfield.

When the B0 bit of a fragment number subfield is 1, the block-ACK bitmap subfield of the BA information field of a compressed block-ACK frame may represent the reception status of up to 16 or 64 MSDUs and/or A-MSDUs according to the B2-B1 bit values of a fragment number subfield indicated in Table 1. When n, the bit position of a block-ACK bitmap subfield (here, n=4*(SN-SSN)+FN), is 1, it may confirm the reception of an MPDU with a sequence number value SN and a fragment number value FN. Here, an SSN is the value of the starting sequence number subfield of a block-ACK starting sequence control subfield, and an operation on a sequence number may be performed with modulo 4096. When n, the bit position of a block-ACK bitmap subfield, is 0, it may represent that an MPDU is not received.

As another example, when a multi-STA block-ACK frame type is indicated, a BA information field format corresponding to multi-STA block-ACK may include one or more Per AID TID info subfields.

In this regard, when an AID11 subfield is not 2045, a Per AID TID info subfield may include an AID TID info subfield, a block-ACK starting sequence control subfield and a block-ACK bitmap subfield. Here, an AID TID info subfield may include an (11-bit) AID11 subfield, a (1-bit) ACK type subfield and a (4-bit) TID subfield. As an example, when a multi-STA block-ACK frame is transmitted by an AP, an AID11 subfield is set as 0, and a value of 2045 in an AID11 subfield may be used as an identifier for an unassociated STA.

In this regard, when an AID11 subfield is not 2045, the value of a subfield within a Per AID TID info subfield, whether an optional subfield is present, etc. may be defined based on Table 2 below.

**[Table 2]**

| **ACK Type Subfield Value** | **TID Subfield Value** | **Presence of Block-ACK Starting Sequence Control Subfield and Block-ACK Bitmap Subfield** | **Context of Per AID TID Info Subfield in Multi-STA Block-ACK Frame** |
|---|---|---|---|
| 0 | 0-7 | Present | Block-ACK Context; |
| | | | Transmitted as ACK for a QoS data frame requesting a block-ACK request frame or a block-ACK frame response |
| 1 | 0-7 | Not Present | Ack Context; |
| | | | Transmitted as ACK for a QoS null frame or QoS data requesting an ACK frame response |
| 0 or 1 | 8-13 | N/A | Reserved |
| 0 | 14 | N/A | Reserved |
| 1 | 14 | Not Present | All ACK Contexts; |
| | | | Transmitted as ACK for an A-MPDU including an MPDU requesting an immediate response, all MPDUs included in an A-MPDU are successfully received |
| 0 | 15 | N/A | Reserved |
| 1 | 15 | Not Present | Management/PS-Poll Frame ACK Context; |
| | | | Transmitted as ACK for a management or PS-Poll frame |

In this regard, when an ACK type subfield is 0, fragment number subfield encoding may indicate the length of a block-ACK bitmap subfield as defined in Table 3. Table 3 illustrates fragment number subfield encoding for a multi-STA block-ACK type.

**[Table 3]**

| **Fragment Number Subfield** | | | **Fragment Level 3 (on/off)** | **Block-ACK Bitmap Subfield Length (Octet)** | **Maximum Number of MSDUs/A-MSDUs that may be confirmed** |
|---|---|---|---|---|---|
| **B3** | **B2-B1** | **B0** | | | |
| 0 | 0 | 0 | Off | 8 | 64 |
| 0 | 1 | 0 | | 16 | 128 |
| 0 | 2 | 0 | | 32 | 256 |
| 0 | 3 | 0 | | 4 | 32 |
| 0 | 0 | 1 | On | 8 | 16 |
| 0 | 1 | 1 | | 16 | 32 |
| 0 | 2 | 1 | | 32 | 64 |
| 0 | 3 | 1 | | 4 | 8 |
| 1 | 0 | 0 | Off | 64 | 512 |
| 1 | 1 | 0 | | 128 | 1024 |
| 1 | 2 or 3 | 0 | | Reserved | Reserved |
| 1 | Any | 1 | | Reserved | Reserved |

Referring to Table 3, when the B0 bit of the fragment number subfield of a block-ACK starting sequence control subfield is 0 and a B3 bit is 0, the BA information field of a multi-STA block-ACK frame includes an 8-octet, 16-octet, 32-octet or 4-octet block-ACK bitmap subfield according to the B2-B1 bits of a fragment number subfield defined in Table 3, which may represent the reception status of up to 64, 128, 256 or 32 MSDUs (or their fragments) and/or A-MSDUs (or their fragments), respectively. When the B0 bit of the fragment number subfield of a block-ACK starting sequence control subfield is 0 and a B3 bit is 1, the BA information field of a multi-STA block-ACK frame includes a 64-octet or 128-octet block-ACK bitmap subfield according to the B2-B1 bits of a fragment number subfield defined in Table 3, which may represent the reception status of up to 512 or 1024 MSDUs and/or A-MSDUs, respectively. Each bit which is the same as 1 in a block-ACK bitmap subfield confirms the reception of a single MSDU or A-MSDU in sequence number order, and the first bit of a block-ACK bitmap subfield may correspond to an MSDU (or its fragment) or an A-MSDU (or its fragment) with a sequence number matching the starting sequence number subfield of a block-ACK starting sequence control subfield.

When the B0 bit of a fragment number subfield is 1, the block-ACK bitmap subfield of the BA information field of a multi-STA block-ACK frame may represent the reception status of up to 16, 32, 64 or 8 MSDUs and/or A-MSDUs according to the B2-B1 bit values of a fragment number subfield indicated in Table 3. When n, the bit position of a block-ACK bitmap subfield (here, n=4*(SN-SSN)+FN), is 1, it may confirm the reception of an MPDU with a sequence number value SN and a fragment number value FN. Here, an SSN is the value of the starting sequence number subfield of a block-ACK starting sequence control subfield, and an operation on a sequence number may be performed with modulo 4096. When n, the bit position of a block-ACK bitmap subfield, is 0, it may represent that an MPDU is not received.

### BIP(Broadcast/Multicast Integrity Protocol)

BIP provides data integrity and replay protection for group addressed robust management frames after establishment of an Integrity Group Temporal Key Security Association (IGTKSA) and for beacon frames after establishment of a Beacon Integrity Group Temporal Key Security Association (BIGTKSA). In addition, BIP provides integrity and replay protection for individually addressed and group addressed Wake Up Radio (WUR) frames.

In this regard, BIP-CMAC-128 may provide data integrity and replay protection by using AES-128 in CMAC mode with a 128-bit integrity key and a CMAC TLen value of 128 (16 octets). In addition, BIP-CMAC-256 may provide data integrity and replay protection by using AES-256 in CMAC mode with a 256-bit integrity key and a CMAC TLen value of 128 (16 octets).

BIP may calculate a management MPDU (MMPDU) message integrity code (MIC) by using an Integrity Group Temporal Key (IGTK) or a Beacon Integrity Group Temporal Key (BIGTK). In addition, BIP may calculate a MIC to protect an individually addressed WUR wake-up frame by using a WUR Temporal Key (WTK). In addition, BIP may calculate a MIC to protect a broadcast or group addressed WUR wake-up frame by using a WIGTK (WUR Integrity Group Temporal Key).

When management frame protection is negotiated, an authenticator shall distribute a new IGTK and an IGTK packet number (IGTK PN, IPN) each time a new Group Temporal Key (GTK) is distributed. Herein, the IGTK may be identified by a MAC address of a transmitting STA and an IGTK key ID encoded in a Key ID field within a Management MIC element (MME). In addition, when beacon protection is enabled, the authenticator may distribute one new BIGTK and a BIGTK packet number (BIPN) when distributing a new GTK. Herein, the BIGTK may be identified by the MAC address of the transmitting STA and a BIGTK key ID encoded in the Key ID field within the MME. In addition, when WUR frame protection is negotiated, the authenticator may distribute one new WIGTK and a WIGTK packet number (WIPN) when distributing a new GTK. Herein, the WIGTK may be identified by the MAC address of the transmitting STA and a WIGTK key ID encoded in the Key ID field within the MME.

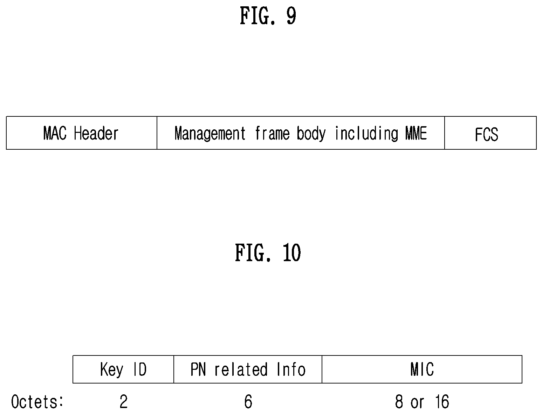

FIG. 9 illustrates an example of a BIP MMPDU format that may be applied to the present disclosure.

Referring to FIG. 9, BIP encapsulation, that is, a BIP MMPDU format, may include a MAC header (e.g., an IEEE 802.11 header), a management frame body including an Management MIC element (MME), and an FCS.

In this regard, the MME format may include element ID information, length information, Key ID information, PN information (e.g., IPN, BIPN, WIPN, etc.), and MIC information.

Additionally, additional authentication data (AAD) used for a BIP-based integrity check (e.g., BIP AAD) may be constructed from a MAC header. For example, the AAD may be composed of an MPDU frame control field and address information. As a specific example, a 20-octet BIP AAD may include a 2-octet MPDU frame control field, a 6-octet MPDU Address 1 field, a 6-octet MPDU Address 2 field, and a 6-octet MPDU Address 3 field.

### A method for supporting a BIP-based integrity check for a block-ACK frame (BlockAck frame)

In a conventional wireless LAN system, for individually addressed data frames (e.g., unicast-based data frames) and management frame(s), encryption/decryption based on Temporal Key Integrity Protocol (TKIP), CTR with CBC-MAC protocol (CCMP), or GCM Protocol (GCMP) may be performed/applied by using a pairwise transient key (PTK). In addition, for group addressed frames (e.g., broadcast-based data frames), encryption/decryption based on TKIP/CCMP/GCMP may be performed/applied by using a group temporal key (GTK). That is, CCMP/GCMP are security protocols that perform encryption/decryption, in which a TK based on a PTK may be used in a single-user (SU) case, and a TK based on a GTK may be used in a multi-user (MU) case. CCMP/GCMP may ensure confidentiality and integrity for data frames and management frame(s).

In addition, for group addressed management frame(s), a BIP-based integrity check may be performed by using an integrity group temporal key (IGTK). In particular, in the case of a beacon frame, a BIP-based integrity check may be performed by using a beacon integrity group temporal key (BIGTK). In the case of BIP, a TK based on an IGTK/BIGTK is used to generate a message integrity code (MIC) for a frame body of the corresponding data frame, and an integrity check based thereon may be performed. That is, BIP, unlike CCMP/GCMP, may ensure only integrity for data frames and management frame(s).

The method of constructing an MPDU based on CCMP and GCMP and the method of constructing a management MPDU (MMPDU) based on BIP have the following differences.

First, in the case of CCMP/GCMP, a transmitting STA performs encryption on a data portion by using CCM/GCM, transmits encrypted data, and a receiving STA may decrypt the received encrypted data. In contrast, in the case of BIP, a transmitting STA does not perform encryption on the data portion and may perform the corresponding protocol to generate a MIC for an integrity check of data in a frame body.

Next, in the case of CCMP/GCMP, an MPDU may be constructed and transmitted/received in an order of a MAC header, a CCMP/GCMP header, encrypted data, a MIC (an encrypted MIC in the case of CCMP), and an FCS. In contrast, in the case of BIP, the MPDU may be constructed and transmitted/received in an order of a MAC header, a management frame body including an MME (management MIC element), and an FCS. Herein, since the MME substitutes for a role of the CCMP/GCMP header, the MME may include information of a Key ID field, an IPN/BIPN, and a MIC.

As described above, protection is supported for data frames and management frames including beacon frames among group addressed frames. However, protection is not supported for control frames, and accordingly, control frames are transmitted and received in a state in which no protocol for encryption/decryption and/or integrity check is applied.

For example, ACK and Block-ACK (BlockAck, Block Ack, BA) frames correspond to a type of control frame. When a transmitting STA transmits data, a receiving STA may transmit ACK for corresponding data to a transmitting STA. In this case, STA(s) that support an A(aggregated)-MPDU may configure corresponding ACK with A-MPDUs and transmit it in the form of block-ACK.

A block-ACK frame belonging to a control frame may be composed of a compressed block-ACK type in which one STA transmits block-ACK and a multi-STA block-ACK type in which the ACK of multiple STAs is transmitted in the form of block-ACK. Unlike a compressed block-ACK type, for a multi-STA block-ACK type, an AID11 subfield may be included within the BA information field of a block-ACK frame and ACK information for each STA may be included in a block-ACK frame by distinguishing which STA transmitted ACK information through a corresponding AID. Based on this, overlapping information for each user/STA in a block-ACK frame may be omitted to reduce overhead.

In this regard, when the information of a block-ACK frame is exposed to the third STA (e.g., an attack STA), ACK information which confirms whether data is transmitted and received between a transmitting STA and a receiving STA may be damaged. As a result, an attack on a block-ACK frame may lead to the degradation of a data transmission and reception capability and the resulting waste of power/medium.

Considering this, the present disclosure proposes a security technique for securing integrity of a block-ACK frame transmitted and received between a transmitting STA and a receiving STA.

Values/names proposed in the present disclosure may be changed, and the scope of the present disclosure is not limited thereto. In addition, the STA in the present disclosure may include a non-AP STA and an AP STA.

In the description of the present disclosure, it is assumed that all receiving STAs receiving a block-ACK frame according to a method proposed in Embodiments 1-1 to 1-3 of the present disclosure transmitted by an AP which is a transmitting STA are a UHR STA (and/or a beyond UHR STA). In other words, if a block-ACK frame configured according to the proposed method of the present disclosure is received by a pre-UHR STA (e.g., an EHT/HE STA, etc.), an error may occur during decoding for a corresponding block-ACK frame. In contrast, receiving STAs receiving a block-ACK frame according to a method proposed in Embodiment 1-4 may include a pre-UHR STA (e.g., a legacy STA, an EHT STA, etc.) and UHR STA(s) (e.g., non-legacy STA(s)). In this regard, a pre-UHR STA may refer to an STA that does not support protection for a block-ACK frame and a UHR STA may refer to an STA that may support protection for a block-ACK frame.

Additionally, although the present disclosure is described by taking, as a representative example, a security technique for a block-ACK frame among the control frames, the proposed method of the present disclosure may be extended and applied to other types of control frames in addition to a block-ACK frame.

In the present disclosure, performing an integrity check on a block-ACK frame may be interpreted as extending and applying a BIP to a block-ACK frame. In this regard, for an existing defined BIP, a matter for a control frame may be additionally defined or a separate protocol based on a BIP for the integrity check of a control frame may be newly defined.

Hereinafter, methods for supporting/performing an integrity check on a block-ACK frame will be described through specific examples.

### Embodiment 1

The present embodiment relates to a method for configuring a block-ACK frame to support an integrity check. Specifically, in order to apply a BIP to a block-ACK frame, the present disclosure proposes a configuration in which protection-related information is included within a block-ACK frame in a sub-form, instead of a method for including a management MIC element (MME) at the end of a frame body when applying a BIP to a management frame.

FIG. 10 illustrates an example of a protection information field/subfield format according to an embodiment of the present disclosure.

Referring to FIG. 10, a protection information (sub)field format including information required for an integrity check may include Key ID information, PN-related information (e.g., IPN/BIPN information), and MIC information.

A corresponding protection information (sub)field format may be included within a block-ACK frame in the sub-form of a protection information subfield.

The length of each piece of information included in the corresponding format is not limited to that illustrated in FIG. 10. For example, a Key ID field may have a length of 2 octets in the case of a Key ID indicating an IGTK or a BIGTK, but may have a length of 2 bits in the case of a Key ID indicating a GTK. In addition, the MIC field may have a length of 8 octets, 16 octets, 64 octets, or the like. Additionally, the length may be changed by additionally applying a MIC value to a separate function.

In this regard, if a key is not required to be used for MIC generation, Key ID information may not be included in the corresponding protection information (sub)field.

Additionally or alternatively, although the present disclosure is described by exemplifying that corresponding information is additionally configured in a block-ACK frame by utilizing a protection information (sub)field format as illustrated in FIG. 10, the present disclosure is not limited thereto. In other words, a key ID, PN-related information and/or an MIC may be included within a control frame to which security is applied in a separated/distributed manner. As an example, in a block-ACK frame structure according to this embodiment, information for a key ID may be located before a protection information (sub)field composed of PN-related information and an MIC (e.g., within a BA control field, a BA information field or a separate per AID TID info field within a block-ACK frame).

A block-ACK frame for an integrity check may be configured based on one or more of the formats described below.

### Embodiment 1-1

A protection information (sub)field according to the present disclosure may be located within a BA control field included in a block-ACK frame.

For example, by applying a BIP to a BA control field within a block-ACK frame, a protection information (sub)field may be included at the last part of a corresponding field.

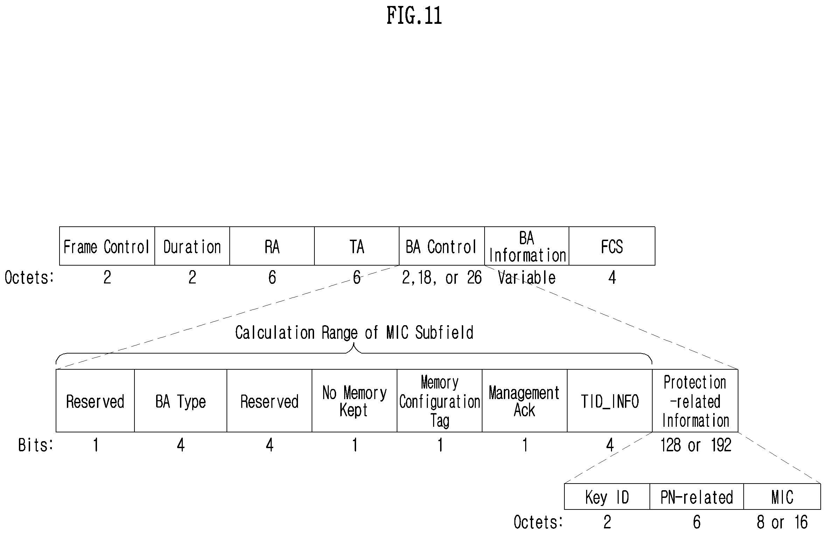

FIG. 11 represents an example of a block-ACK frame configuration supporting an integrity check according to an embodiment of the present disclosure.

Referring to FIG. 11, a protection information (sub)field described in FIG. 10 may be located at the last part within a common information field.

In this case, a transmitting STA may apply a BIP to a BA control field and add a protection information (sub)field to the last of a corresponding field to transmit a block-ACK frame. Based on this, a receiving STA that receives a corresponding block-ACK frame may perform an integrity check on a BA control field within a block-ACK frame based on corresponding information.

In this regard, the calculation range of MIC information included in a corresponding protection information (sub)field, i.e., an MIC subfield, may correspond to a BA control field in which a protection information (sub)field is included. In other words, a target to which an integrity check is performed/applied based on a protection information (sub)field may correspond to a BA control field to which a corresponding (sub)field belongs.

### Embodiment 1-2

A protection information (sub)field according to the present disclosure may be located within a BA information field included in a block-ACK frame.

For example, a BIP may be applied to each BA information field within a block-ACK frame to include a protection information (sub)field in the last part of a corresponding BA information field.

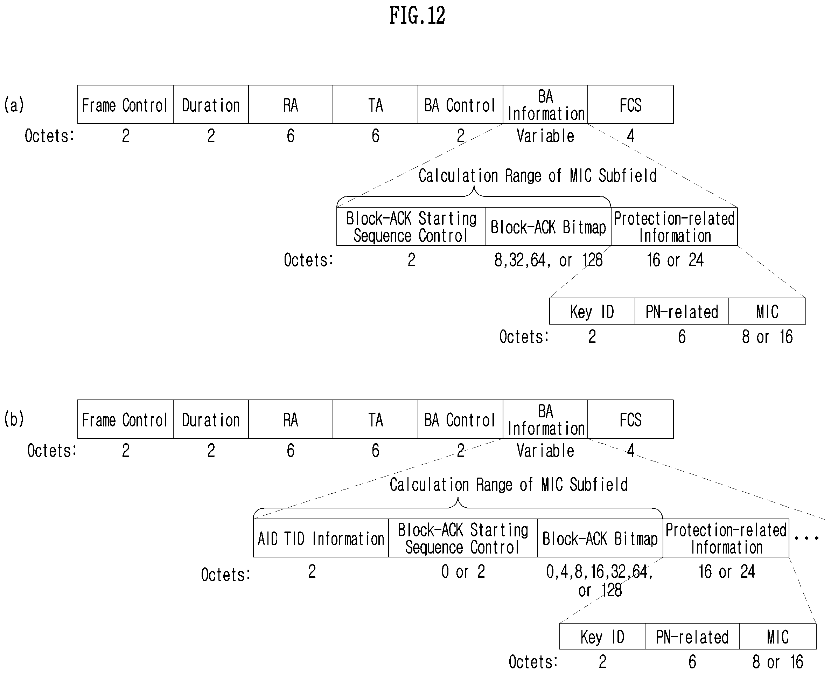

FIG. 12 represents another example of a block-ACK frame configuration supporting an integrity check according to an embodiment of the present disclosure.

Specifically, FIG. 12(a) illustrates a case in which a protection information (sub)field is included in a BA information field within a compressed block-ACK frame, and FIG. 12(b) illustrates a case in which a protection information (sub)field is included in each AID TID info subfield of a BA information field within a multi-STA block-ACK frame. Here, a Per AID TID info subfield may include an AID TID info field, a block-ACK starting sequence control field and a block-ACK bitmap field.

Referring to FIG. 12, a protection information (sub)field described in FIG. 10 may be located at the last part within each BA information field.

For example, a transmitting STA may apply a BIP to each BA information field and add a protection information (sub)field to the last of a corresponding field to configure and transmit a block-ACK frame. Based on this, a receiving STA that receives a corresponding block-ACK frame may perform an integrity check on each BA information field.

In this regard, the value of a Key ID and MIC configuring a protection information (sub)field included in a Per AID TID info subfield within a multi-STA block-ACK frame may refer to the PTK of an STA corresponding to a corresponding AID and the value of an MIC may be derived based on a corresponding Key ID. As an example, a receiving STA may derive the MIC value of a Per AID TID info subfield by using key information included in a key ID for a Per AID TID info subfield and perform an integrity check based on this.

### Embodiment 1-3

A protection information (sub)field according to the present disclosure may be located at a part other than a BA information field and a BA control field within a block-ACK frame.

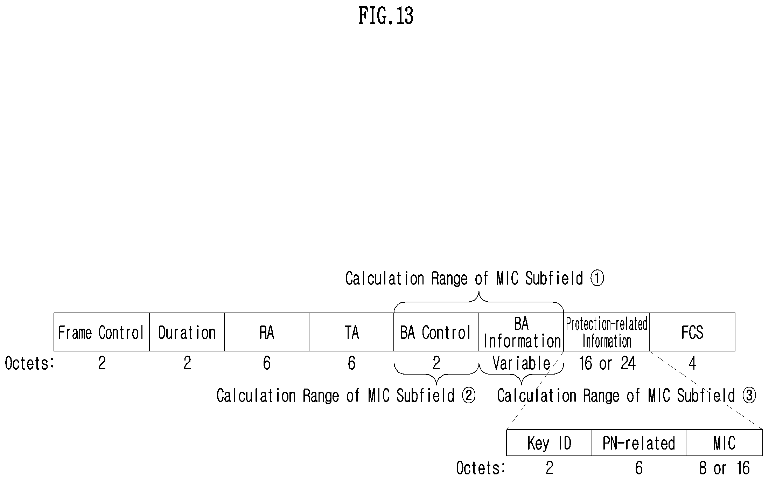

FIG. 13 represents another example of a block-ACK frame configuration supporting an integrity check according to an embodiment of the present disclosure.

Referring to FIG. 13, a protection information field may be located before an FCS within a block ACK frame.

In this case, a transmitting STA may apply a BIP to a BA control field and/or a BA information field and add a protection information (sub)field to the last part to configure the value(s) of each subfield. In other words, when transmitting STAs transmit a block-ACK frame to a receiving STA, a block-ACK frame as shown in FIG. 13 may be configured.

In this regard, MIC information may be configured by considering three cases. As an example, MIC information may be configured by deriving an MIC value for both a BA control field and a BA information field. As another example, MIC information may be configured by deriving an MIC value for a BA control field. As another example, MIC information may be configured by deriving an MIC value for a BA information field.

If a block-ACK frame is a multi-STA block-ACK frame type, an MIC value for all Per AID TID info subfields within a BA information field is configured, and in this case, a GTK for the protection of a block-ACK frame or an existing GTK, IGTK or BIGTK may be utilized.

### Embodiment 1-4

A protection information (sub)field according to the present disclosure may be configured as one of a plurality of per AID TID info fields configuring a BA information field within a block-ACK frame in a multi-STA block-ACK type.

In other words, a transmitting STA may configure a block-ACK frame by configuring/including a protection information (sub)field according to the present disclosure as one of a plurality of per AID TID info fields configuring a BA information field within a block-ACK frame in a multi-STA block-ACK type.

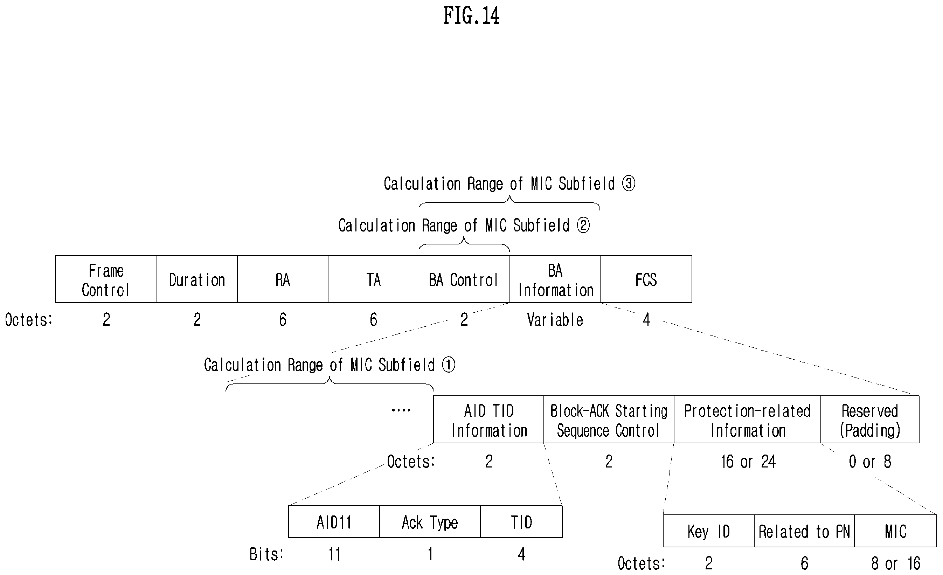

FIG. 14 represents another example of a block-ACK frame configuration supporting an integrity check according to an embodiment of the present disclosure.

Referring to FIG. 14, a transmitting STA may configure a per AID TID info field including a protection information (sub)field by including an AID TID info subfield, a length-related field, a protection information (sub)field and/or a padding/reserved subfield.

In this regard, in a per AID TID info field including a protection information (sub)field, an AID11 subfield within an AID TID info subfield is set as the value of a specific AID indicating that a protection information (sub)field is included in a corresponding per AID TID info field.

In this case, the value of an Ack type subfield and/or the value of a TID subfield within a corresponding AID TID info subfield may be set based on at least one of the following options.

Option 1) An Ack type subfield may be set as a reserved value.

Option 2) A TID subfield may be set as a reserved value.

Option 3) The value of an Ack type subfield and the value of a TID subfield may be set based on definition for the meaning of a per AID TID info subfield according to the existence of optional subfield(s) when an AID11 subfield is not 2045 (e.g., definition according to Table 2).

Option 4) Setting the value of an Ack type subfield and the value of a TID subfield may not follow definition for the meaning of a per AID TID info subfield according to the existence of optional subfield(s) when an AID11 subfield is not 2045 (e.g., definition according to Table 2).

In other words, definition according to Table 2 may be extended not only to a case in which an AID11 subfield is not 2045, but also to a case in which it is not the value of a specific AID indicating that a protection information (sub)field is included. For example, when the value of specific AID11 indicating that a protection information (sub)field is included is 2044, definition according to Table 2 may be extended/substituted with definition for the meaning of a per AID TID info subfield according to the existence of optional subfield(s) when an AID11 subfield is not 2045 and 2044.

In this case, an Ack type subfield and a TID subfield may be defined to indicate at least one of the following contexts/meanings.
- Whether a protection information (sub)field exists
- Whether key ID information (e.g., a key ID subfield) exists within a protection information (sub)field
- Length of key ID information (e.g., a key ID subfield) within a protection information (sub)field
- Whether PN-related information (e.g., an IPN/BIPN subfield) exists within a protection information (sub)field
- Length of PN-related information (e.g., an IPN/BIPN subfield) within a protection information (sub)field
- Whether MIC information (e.g., an MIC subfield) exists within a protection information (sub)field
- Length of MIC information (e.g., an MIC subfield) within a protection information (sub)field

A length-related subfield located after the above-described AID TID info subfield may be configured in the form of a block-ACK starting sequence control subfield within an existing per AID TID info field or may be a newly defined subfield.

First, a case is described in which a length-related subfield is configured in the form of a block-ACK starting sequence control subfield.

An existing block-ACK starting sequence control subfield is defined to indicate the length of a block-ACK bitmap subfield included in a corresponding per AID TID info field. For example, when a block-ACK starting sequence control subfield exists, the length of a block-ACK bitmap subfield and the length of the maximum number of MSDUs/A-MSDUs may be indicated by using the bit combination of a fragment number subfield within a corresponding subfield according to whether of fragmentation level 3 (e.g., refer to Table 3).

In contrast, when an AID value indicating that a per AID TID info field includes a protection information (sub)field is set, the value of a block-ACK starting sequence control subfield may be defined to indicate the total length including a padding or reserved subfield for matching the length of a protection information (sub)field and an existing block-ACK bitmap subfield other than a block-ACK bitmap subfield.

As an example, when a protection information (sub)field has a length of 16 octets, the bit combination of a fragment number subfield within a block-ACK starting sequence control subfield may be set to indicate 16 octets. As another example, when a protection information (sub)field has a length of 24 octets, the bit combination of a fragment number subfield within a block-ACK starting sequence control subfield may be set to indicate 32 octets and a padding or reserved subfield having a length of 8 octets after a protection information (sub)field may be included in a corresponding per AID TID info field.

A corresponding method corresponds to a method that may be applied when the bit combination of a fragment number subfield within a block-ACK starting sequence control subfield is set/defined to indicate a length of 8 octets, 16 octets, 32 octets or 4 octets.

If the bit combination of a fragment number subfield within a block-ACK starting sequence control subfield may indicate a length of 24 octets, a padding or reserved subfield after a protection information (sub)field may not be included in a corresponding per AID TID info field.

In addition, the length of an existing block-ACK bitmap subfield may also be indicated as 64 octets or 128 octets. Based on this, when a length of 64 octets or 128 octets is indicated through a combination of fragment number subfields within a block-ACK starting sequence control subfield, the length of an existing block-ACK bitmap subfield may be matched through a padding or reserved subfield located after a protection information (sub)field.

Next, a case in which a protection information (sub)field is included within a per AID TID subfield and a case in which a length-related subfield is defined as a new subfield for indicating the length of a corresponding protection information (sub)field. In the present disclosure, for clarity of description, a corresponding new subfield is referred to as a protection information length subfield, but a corresponding name is merely an example and may be applied by being substituted with another name.

As an example, if a protection information length subfield is 1 bit, when a corresponding subfield is set as 0, it may indicate that the length of a protection information (sub)field is 16 octets and when a corresponding subfield is set as 1, it may indicate that the length of a protection information (sub)field is 24 octets. As another example, a protection information length subfield may be defined to have a length of 3 bits or more, and in this case, a corresponding subfield may be defined to indicate values of various lengths (e.g., 2 octets, 4 octets, 6 octets, 8 octets, 16 octets, 24 octets, 32 octets, etc.).

In addition, as illustrated in FIG. 14, a key ID information/subfield within a protection information (sub)field may consist of 2 octets, a PN-related information/subfield may consist of 6 octets and an MIC information/subfield may consist of 8 or 16 octets, but it is merely an example and the scope of the present disclosure is not limited thereto.

In this regard, when the length of an MIC information/subfield is 8 octets, a key ID information/subfield is 2 octets and a PN-related information/subfield is 6 octets, so a protection information (sub)field has a length of 16 octets. In contrast, when the length of an MIC information/subfield is 16 octets, a key ID information/subfield is 2 octets and a PN-related information/subfield is 6 octets, so a protection information (sub)field has a length of 24 octets.

Unlike Embodiment 1-1, Embodiment 1-2 and Embodiment 1-3 proposed in the present disclosure, a corresponding method, i.e., a method described in Embodiment 1-4, corresponds to a method that may be used even when per AID TID info subfield(s) for a pre-UHR STA as well as a UHR STA (and/or a beyond-UHR STA) are configured together in a BA information field within a block-ACK frame. For example, UHR STA(and/or beyond-UHR STA)(s) may recognize that it is a per AID TID info subfield including a protection information (sub)field through the value of an AID11 subfield. On the other hand, pre-UHR STA(s) may ignore a per AID TID info subfield including a protection information (sub)field because the value of an AID11 subfield is different from the value of their AID11

Additionally, FIG. 14 illustrates that a per AID TID info subfield including a protection information (sub)field is configured as the last per AID TID info subfield within a BA information field, but it is merely an example and the scope of the present disclosure is not limited thereto.

Additionally, an MIC value/information within a block-ACK frame configured in a manner described in Embodiment 1-4 may be derived/calculated by applying a BIP to a BA control field and/or BA information field(s) based on three methods. In this case, an integrity check may be performed based on one or more of the three methods described below.

For example, as shown in the calculation range 1 of an MIC subfield illustrated in FIG. 14, the first method for calculating an MIC value corresponds to a method for deriving an MIC for all per AID TID info fields within a BA information field within a block-ACK frame. In this case, per AID TID info fields within a BA information field may refer to per AID TID info fields including information delivered by a transmitting STA to receiving STAs (i.e., per AID TID info fields including the AID value of a receiving STA), and a per AID TID info field including a protection information (sub)field is excluded when deriving an MIC. As another example, as shown in the calculation range 2 of an MIC subfield illustrated in FIG. 14, the second method for calculating an MIC value corresponds to a method for deriving an MIC for a BA control field within a block-ACK frame. As another example, as shown in the calculation range 3 of an MIC subfield illustrated in FIG. 14, the third method for calculating an MIC value corresponds to a method for deriving for per AID TID info field(s) including the AID of receiving STA(s) within a BA control field and a BA information field within a block-ACK frame. In other words, the third method may be a method that includes both the first method and the second method.

Additionally, regarding a block-ACK frame supporting an integrity check according to the present disclosure, transmitting STA(s) and receiving STA(s) may share information for whether a BIP for a block-ACK frame is supported. The corresponding information may be shared through a specific element (e.g., an extended RSN element (RSNXE)) in a discovery process (e.g., a beacon frame, a probe response frame, etc.) and/or an (re)association process (e.g., a (re)association request frame, a (re)association response frame, etc.).

In this regard, by utilizing a reserved bit within an existing element (e.g., an RSNXE) or by defining a new (sub)field within a new element, whether BIP application to a block-ACK frame is supported may be shared. For example, a 1-bit protected block-ACK support (sub)field (protected BlockAck support (sub)field) may be newly defined, and it may be defined to ensure that a value of 1 means/indicates that application of a BIP to a block-ACK frame is supported and a value of 0 means/indicates that application of a BIP to a block-ACK frame is not supported.

If both a transmitting STA and a receiving STA support a BIP and support application of a BIP to a block-ACK frame, two STAs may perform application of a BIP to a block-ACK frame. In contrast, when a transmitting STA or a receiving STA support a BIP but does not support application of a BIP to a block-ACK frame, two STAs may not perform application of a BIP to a block-ACK frame. Additionally, when a block-ACK frame is applied to a BIP, the cipher suite of a management frame (e.g., BIP-GMAC-128, BIP-GMAC-256 or BIP-CMAC-256, etc.) negotiated by a transmitting STA and a receiving STA during a negotiation process may be used in the same manner. Alternatively, in order to apply a block-ACK frame to a BIP, a transmitting STA and a receiving STA may negotiate an additional/separate cipher suite for a corresponding block-ACK frame.

For example, when a block-ACK frame is configured in a format proposed in Embodiment 1-1, Embodiment 1-2 and/or Embodiment 1-3 of the present disclosure, it may be allowed/used only when both the transmitting STA and the receiving STA of a corresponding block-ACK frame support BIP application to a block-ACK frame. In other words, for both a corresponding transmitting STA and receiving STA, the value of a protected block-ACK support (sub)field is set as a value that supports/indicates BIP application to a block-ACK frame.

As another example, when a block-ACK frame is configured in a format proposed in Embodiment 1-4 of the present disclosure, it may be allowed/used even when the transmitting STA of a corresponding block-ACK frame supports BIP application to a block-ACK frame, but only some of the receiving STAs support BIP application to a block-ACK frame. In other words, for a corresponding transmitting STA, the value of a protected block-ACK support (sub)field is set as a value that supports/indicates BIP application to a block-ACK frame. In contrast, for some receiving STA(s), the value of a protected block-ACK support (sub)field is set as a value that supports/indicates BIP application to a block-ACK frame, but for some other receiving STA(s), the value of a protected block-ACK support (sub)field may be set as a value indicating that BIP application to a block-ACK frame is not supported.

Additionally or alternatively, information for whether application of a BIP to a block-ACK frame is supported and which one of the formats proposed in the present disclosure (e.g., formats illustrated in FIGS. 11 to 14) is used to configure a protection information (sub)field may be shared between a transmitting STA and a receiving STA. In this regard, for sharing corresponding information, a reserved bit within an existing element (e.g., an RSNXE) and/or reserved bit(s) within a BA control field and/or a new (sub)field within a new element (e.g., a protected block-ACK mode (sub)field) (protected BlockAck mode (sub)field) may also be defined. A corresponding (sub)field may be included in a beacon frame by a transmitting STA or included in a data frame by a receiving STA not only during an (re)association process but also during a data transmission and reception process.

For example, when the value of a protected block-ACK mode (sub)field is set as 0, it may mean/indicate that a block-ACK frame is configured in at least one manner and that a BIP is not applied to a corresponding block-ACK frame. In contrast, when the value of a protected block-ACK mode (sub)field is set as 1 or more, it may mean/indicate that a BIP is applied to a block-ACK frame.

As a specific example, when a corresponding protected block-ACK mode (sub)field may have a value greater than or equal to 1, the meaning of the value of a corresponding protected block-ACK mode (sub)field may be defined as shown in Table 4 below. Table 4 is illustrative, and at least one of the values described in Table 4 may be applied/defined, and a specific value may be set/defined differently from a corresponding example.

**[Table 4]**

| Value of Protected Block-ACK Mode (sub)field | Meaning |
|---|---|
| 1 | Configure a block-ACK frame based on Embodiment 1-1 |
| 2 | Configure a block-ACK frame based on Embodiment 1-2 |
| 3 | Configure a block-ACK frame based on Embodiment 1-1 and Embodiment 1-2 |
| 4 | Configure a block-ACK frame based on Embodiment 1-3 |
| 5 | Configure a block-ACK frame based on Embodiment 1-4 |
| 6 | Configure a block-ACK frame based on Embodiment 1-4, Perform an integrity check based on an MIC value for a BA control field and a BA information field |
| 7 | Configure a block-ACK frame based on Embodiment 1-4, Perform an integrity check based on an MIC value for a BA control field |
| 8 | Configure a block-ACK frame based on Embodiment 1-4, Perform an integrity check based on an MIC value for a BA information field |

Referring to Table 4, through a protected block-ACK mode (sub)field, a method for calculating an MIC value along with the configuration/format of a block-ACK frame including a protection information (sub)field according to the present disclosure may be indicated.

However, the scope of the present disclosure is not limited thereto, and through a protected block-ACK mode (sub)field, only the configuration/format of a block-ACK frame including a protection information (sub)field according to the present disclosure may be indicated, and a method for calculating an MIC value may be separately indicated through another (sub)field. For example, an MIC calculation range (sub)field may be defined, and the value of a corresponding (sub)field may be defined as shown in Table 5.

**[Table 5]**

| Value of MIC Calculation Range (sub)field | Meaning |
|---|---|
| a | Calculation of MIC Value for BA Control Field and BA Information Field |
| b | Calculation of MIC Value for BA Control Field |
| c | Calculation of MIC Value for BA Information Field |
| ... | Reserved |

In other words, a receiving STA may recognize/confirm a location at which a protection information (sub)field is included within a received block-ACK frame through a protected block-ACK mode (sub)field. In addition, based thereon, a corresponding receiving STA may calculate an MIC value by using a value indicated by an MIC calculation range (sub)field, and through this, may perform an integrity check on a block-ACK frame.

### Embodiment 2

The present embodiment relates to a method for generating an MIC for BIP transmission/reception regarding the above-described application of a BIP to a block-ACK frame.

For a block-ACK frame, the type of a block-ACK frame transmitted and received may be indicated according to the value of a BA type subfield within a BA control field. According to an indicated value, a receiving STA may confirm whether a corresponding block-ACK frame is an individually addressed frame or a group addressed frame.

In this regard, when a BIP is applied to a block-ACK frame, a key used for configuring an MIC value may be used differently according to whether a frame is an individually addressed frame or a group addressed frame.

For example, in the case of an individually addressed data frame, MIC value calculation may be performed by using a TK based on a PTK that is identically generated between a transmitting STA and a receiving STA. On the other hand, in the case of a group addressed data frame, MIC value calculation may be performed by using a TK based on a GTK shared by the transmitting STA with the receiving STA.

In the case of a conventional BIP (e.g., BIP applied to data frames/management frames), BIP usage based on an IGTK or a BIGTK is possible. In contrast, in the present disclosure, it is assumed that BIP usage based on a PTK/GTK is possible.

Hereinafter, a key usage method for calculating and checking an MIC value for an individually addressed block-ACK frame and/or a group addressed block-ACK frame will be described in detail.

First, for an individually addressed block-ACK frame, an MIC value may be calculated/verified as follows.

A transmitting STA and a receiving STA may calculate an MIC value by using a TK based on a PTK that is identically generated during a 4-way handshake process. For example, with respect to application of a BIP to a block-ACK frame, a transmitting STA and a receiving STA may identically utilize a PTK generated regarding the protection of a data frame during a 4-way handshake process or may utilize a (new) PTK that is identically generated/negotiated/shared mutually regarding the protection of a corresponding block-ACK frame during a 4-way handshake process.

Alternatively, a transmitting STA and a receiving STA may calculate an MIC value by using a TK based on a new PTK for an individually addressed block-ACK frame that is shared during a 4-way handshake process. For example, a corresponding new TK may be referred to as a block-ACK PTK (block-ACK PTK, BAPTK), and a transmitting STA may generate and share a different BAPTK for each receiving STA. In other words, a different BAPTK may be shared for receiving STA 1 and receiving STA 2. In addition, for example, when an MIC is derived by using a new TK (e.g., a BAPTK, a BAGTK) for a block-ACK frame, a transmitting STA may generate and share a new TK with each receiving STA. In other words, receiving STA 1 and receiving STA 1 may share the same new TK. In this case, through a new key data element (KDE) for a new TK (e.g., a BAPTK/BAGTK KDE) generated and shared by a transmitting STA, information for a corresponding new TK, information related to a cipher capable of using a corresponding new TK, etc. may be shared.

When a key (e.g., a new TK) for the protection of a block-ACK frame exists, a receiving STA may use a corresponding key to perform an MIC check on a received block-ACK frame. In this regard, a corresponding key may be generated and/or shared by a transmitting STA and/or a receiving STA. Otherwise, a receiving STA may perform an MIC check on a block-ACK frame based on a key (e.g., a PTK) for the integrity check/encryption/decryption of a previously generated unicast data frame with a transmitting STA.

Next, for a group addressed block-ACK frame, an MIC value may be calculated/checked as follows.

A transmitting STA may generate an IGTK or a BIGTK during a 4-way handshake process and share the same with a receiving STA, and the transmitting STA and the receiving STA may calculate a MIC value by using a TK based on the corresponding IGTK or the corresponding BIGTK.

Alternatively, a transmitting STA may generate a GTK during a 4-way handshake process and share the same with a receiving STA, and the transmitting STA and the receiving STA may calculate a MIC value by using a TK based on the corresponding GTK.

Alternatively, a transmitting STA may generate a new GTK for a group addressed block-ACK frame during a 4-way handshake process and share the same with a receiving STA, and a transmitting STA and a receiving STA may calculate an MIC value by using a TK based on a corresponding new GTK. Herein, a new GTK may be referred to as a block-ACK broadcast GTK (BAGTK), and a transmitting STA may share the same value of a BAGTK with receiving STAs. In other words, an AP may generate and share the same BAGTK with STAs associated with itself. In addition, between a transmitting STA and a receiving STA, information for a BAGTK and information related to a cipher suite that may use a corresponding BAGTK, etc. may be shared through a new KDE for a corresponding BAGTK (e.g., a TBGTK KDE).

If a receiving STA receives a key for protecting a block-ACK frame (e.g., a BAGTK) from a transmitting STA, it may perform an MIC check on a block-ACK frame based on a corresponding key. Otherwise, a receiving STA may perform an MIC check on a block-ACK frame based on a key (e.g., a GTK, an IGTK or a BIGTK) for broadcast frame(s) shared in advance with a transmitting STA.

### Embodiment 3

The present embodiment relates to a specific method for performing the protection of a block-ACK frame based on a block-ACK frame configuration proposed in the present disclosure.

First, when a block-ACK frame is a group addressed block-ACK frame, a block-ACK frame configuration proposed in the present disclosure may be used as in the following examples.

For example, for a block-ACK frame configuration described in Embodiment 1-1 (e.g., refer to FIG. 11), a transmitting STA and/or a receiving STA may derive an MIC value through a BIP by using the above-described GTK, IGTK or BIGTK or a new TK (e.g., a BAGTK) for a BA control field. Additionally, for a block-ACK frame configuration described in Embodiment 1-2 (e.g., refer to FIG. 12(a) and (b)), a transmitting STA and/or a receiving STA may derive an MIC value through a BIP by using the above-described PTK or a new TK (e.g., a BAPTK) for a BA information field. In this case, for FIG. 12(b), in order to derive an MIC value for a Per AID TID info subfield within a BA information field, a transmitting STA and/or a receiving STA may use a new TK (e.g., a BAPTK) or the PTK of an STA corresponding to the AID of a corresponding Per AID TID info subfield. Alternatively, as in FIG. 12(a), for a compressed block-ACK frame that does not include a subfield including an AID (e.g., an AID11 subfield), a new TK (e.g., a BAPTK) or the PTK of an STA corresponding to the MAC address (e.g., RA) of a transmitting STA may be used.

As another example, for a block-ACK frame configuration described in Embodiment 1-3 and/or Embodiment 1-4 (e.g., see FIG. 13 and FIG. 14), a transmitting STA and/or a receiving STA may derive an MIC value through a BIP by using the above-described GTK, IGTK or BIGTK or a new TK (e.g., a BAGTK) for a BA control field and/or a BA information field.

Next, when a block-ACK frame is an individually addressed block-ACK frame, a block-ACK frame configuration proposed in the present disclosure may be used as in the following examples.

For example, for a block-ACK frame configuration described in Embodiment 1-1 (e.g., see FIG. 11), a transmitting STA and/or a receiving STA may derive an MIC value through a BIP by using the above-described PTK or a new TK (e.g., a BAPTK) for a BA control field.

As another example, for a block-ACK frame configuration described in Embodiment 1-2 (e.g., refer to FIG. 12(a) and (b)), a transmitting STA and/or a receiving STA may derive an MIC value through a BIP by using the above-described PTK or a new TK (e.g., a BAPTK) for a BA information field. In this case, for FIG. 12(b), in order to derive an MIC value for a Per AID TID info subfield within a BA information field, a transmitting STA and/or a receiving STA may use a new TK (e.g., a BAPTK) or the PTK of an STA corresponding to the AID of a corresponding Per AID TID info subfield. Alternatively, as in FIG. 12(a), for a compressed block-ACK frame that does not include a subfield including an AID (e.g., an AID11 subfield), a new TK (e.g., a BAPTK) or the PTK of an STA corresponding to the MAC address (e.g., a recipient address (RA)) of a transmitting STA may be used.

As another example, for a block-ACK frame configuration described in Embodiment 1-3 and/or Embodiment 1-4 (e.g., see FIG. 13 and FIG. 14), a transmitting STA and/or a receiving STA may derive an MIC value through a BIP by using the above-described PTK or a new TK (e.g., a BAPTK) for a BA control field and/or a BA information field. In this case, in order to derive an MIC value for a BA control field and/or a BA information field, a new TK (e.g., a BAPTK) or the PTK of an STA corresponding to the recipient address (RA) of a corresponding block-ACK frame may be used.

Based on methods proposed in the present disclosure, protection for a block-ACK frame may be performed as follows.

For exemplary situations described below, it is assumed that a transmitting STA and receiving STA(s) support the utilization of a block-ACK frame on a BIP through a protected block-ACK support (sub)field and/or share a method for configuring a protection information (sub)field within a block-ACK frame through a protected block-ACK mode (sub)field.

A receiving STA may configure additional authentication data (AAD) for a block-ACK frame based on the information of the MAC header of an MPDU received from a transmitting STA (e.g., a frame control field, a duration field, an RA field, a TA field, etc.). Thereafter, a receiving STA may calculate an MIC value based on an MPDU by using corresponding AAD. In this case, a receiving STA may derive an MIC value by performing a process in which a transmitting STA calculates an MIC value based on a corresponding MPDU in the same manner.

Thereafter, the receiving STA may compare the derived MIC value with a MIC value transmitted by the transmitting STA (e.g., MIC information included in a protection information (sub)field). If the two MIC values are identical, the receiving STA may follow information of the obtained MPDU. In contrast, if the two MIC values are not identical, the receiving STA may recognize that at least one piece of information within the obtained MPDU has been modified by a third STA (e.g., an attacking STA) or has been corrupted during transmission/reception, and may discard the same.

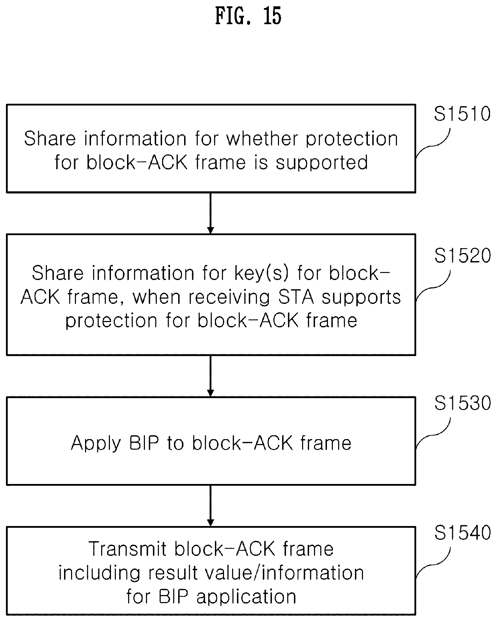

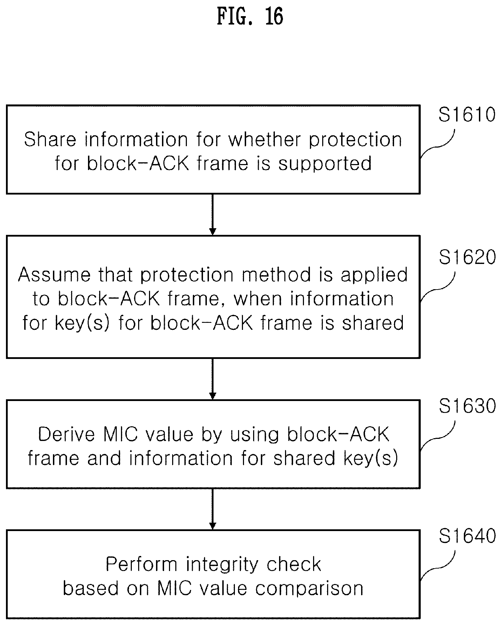

The operation of an STA supporting/performing protection for a block-ACK frame according to an embodiment of the present disclosure may be as shown in FIGS. 15 and 16.

FIG. 15 illustrates the operation of a transmitting STA supporting an integrity check for a block-ACK frame according to the present disclosure.

Referring to FIG. 15, a transmitting STA may share information for whether protection (e.g., an integrity check) for a block-ACK frame is supported with a receiving STA S1510.

In this case, when both a transmitting STA and receiving STA(s) apply security to a block-ACK frame, a transmitting STA may generate and share key(s) (e.g., PTK/GTK/BAPTK/BAGTK(s)) used for the integrity check of a block-ACK frame S1520. In this regard, a transmitting STA and a receiving STA may generate/negotiate/share the same key information through a key generation process or key information generated by a transmitting STA may be delivered to a receiving STA.

Based on corresponding key(s), a transmitting STA may apply a BIP to a configured block-ACK frame S1530. In this regard, a transmitting STA may derive an MIC value for a block-ACK frame by using key(s) shared in advance with a receiving STA.

A transmitting STA may transmit a block-ACK frame including a result value/information for BIP application S1540. For example, a transmitting STA may transmit a block-ACK frame including a derived MIC value and the ID value of key(s) used to derive a corresponding MIC value to receiving STA(s).

Regarding the above-described process, a transmitting STA may share/negotiate information for which format is used to configure information related to an integrity check within a transmitted block-ACK frame in advance with a receiving STA or may transmit corresponding information by including it in a block-ACK frame.

FIG. 16 illustrates the operation of a receiving STA supporting an integrity check for a block-ACK frame according to the present disclosure.

Referring to FIG. 16, a receiving STA may share information for whether protection (e.g., an integrity check) for a block-ACK frame is supported with a transmitting STA S1610.

In this case, when key(s) used for the integrity check of a block-ACK frame are shared with a transmitting STA, a receiving STA may assume that a protection method is applied to a block-ACK frame transmitted by a transmitting STA S1620.

In this regard, a transmitting STA and a receiving STA may generate/negotiate/share the same key information (e.g., PTK/GTK/BAPTK/BAGTK, etc.) through a key generation process or key information generated by a transmitting STA may be delivered to a receiving STA.

For example, a receiving STA may receive a block-ACK frame transmitted from a transmitting STA and recognize that it is applied to a BIP based on information related to a method for configuring information for an integrity check within a block-ACK frame and/or key(s) shared in advance.

Based on this, when receiving a block-ACK frame, a receiving STA may derive an MIC value by using a block-ACK frame and previously shared/generated/negotiated key(s) (e.g., PTK/GTK/BAPTK/BAGTK, etc.) S1630.

Subsequently, a receiving STA may perform an integrity check by comparing a derived MIC value with an MIC value transmitted by a transmitting STA (i.e., an MIC value according to MIC information included within a block-ACK frame) S1640.

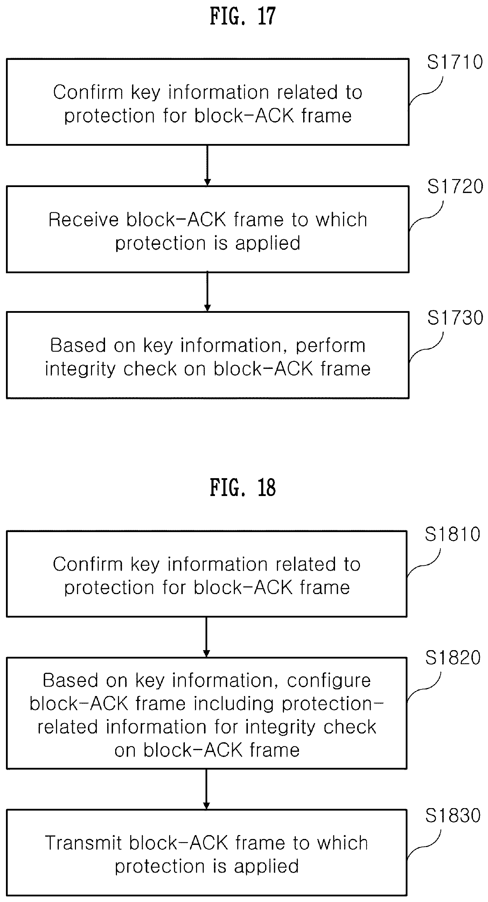

Hereinafter, FIGS. 17 and 18 illustrate an operation performed by an STA according to the proposed method of the present disclosure described above. In FIGS. 17 and 18, the second STA may correspond to a transmitting STA (e.g., an AP) and the first STA may correspond to a receiving STA (e.g., a non-AP STA associated with an AP).

FIG. 17 is a diagram for describing an example of a method performed by the first STA according to the present disclosure.

Referring to FIG. 17, the first STA may confirm key information related to protection for a block-ACK frame S1710.

Herein, protection for a block-ACK frame may be based on an integrity check which utilizes a BIP described above in the present disclosure.

In this regard, as described above in the present disclosure, the first STA may negotiate/share/generate key information (related to a corresponding block-ACK frame) with the second STA in advance through a 4-way handshake process. Additionally or alternatively, the first STA may receive key information generated by the second STA.

The first STA may receive, from the second STA, a block-ACK frame to which the above-described protection is applied S1720.

Subsequently, the first STA may perform an integrity check on a block-ACK frame based on the above-described key information S1730.

In this regard, when a block-ACK frame is indicated as a block-ACK type for a multi-STA, protection-related information for an integrity check may be included in a specific Per TID AID Info field among a plurality of Per TID AID Info fields included in a block-ACK information field within a corresponding block-ACK frame. As an example, a specific Per TID AID Info field may correspond to a Per TID AID Info field located last among a plurality of Per TID AID Info fields.

According to an embodiment of the present disclosure, an AID subfield included in a specific Per TID AID Info field may be set as a pre-defined AID value to indicate whether protection-related information is included. As an example, a pre-defined AID value may be 2044.

In addition, according to an embodiment of the present disclosure, a combination of the value of an ACK type subfield and the value of a TID subfield included in a specific Per TID AID Info field may be set as a value indicating at least one of 1) whether protection-related information is present, 2) whether one or more subfields included in protection-related information are present or 3) the length of one or more subfields included in protection-related information. Here, one or more subfields included in protection-related information may include at least one of the first subfield related to key information, the second subfield related to a packet number for a block-ACK frame or the third subfield related to MIC information for an integrity check (e.g., see FIG. 10).

The above-described integrity check may be performed based on a comparison between the first MIC value calculated for at least one of a block-ACK control field or a block-ACK information field within a block-ACK frame and the second MIC value indicated by the third subfield. In this case, when a block-ACK information field is applied to the calculation of the first MIC value, a specific Per TID AID Info field may be excluded from the calculation of the first MIC value. In other words, only a Per TID AID Info field including the AID value of a received STA may be applied to the calculation of an MIC value.

In addition, according to an embodiment of the present disclosure, at least one of an ACK type subfield or a TID subfield included in a specific Per TID AID Info field may be set as a reserved value.

In addition, according to an embodiment of the present disclosure, an ACK type subfield and a TID subfield included in a specific Per TID AID Info field may be defined in the same manner as when the value of an AID subfield included in a Per TID AID Info field is not set as 2045.

In addition, according to an embodiment of the present disclosure, a specific Per TID AID Info field may include a length-related subfield for indicating the length of a subfield corresponding to protection-related information. Here, a corresponding length-related subfield may be based on a previously defined subfield format or may be a subfield that is newly defined to indicate the length of a subfield corresponding to protection-related information.

For example, when a length-related subfield is configured in a pre-defined block-ACK starting sequence control subfield format, a corresponding length-related subfield may 1) indicate the length of a subfield corresponding to protection-related information or 2) indicate the sum of the length of a subfield corresponding to protection-related information and the length of a padding or reserved subfield located after protection-related information.

In addition, according to an embodiment of the present disclosure, information representing whether protection for a block-ACK frame is supported may be transmitted and received between the first STA and the second STA. As an example, information representing whether protection for a block-ACK frame is supported may be transmitted and received through at least one of a beacon frame, a probe request frame, a probe response frame, an association request frame, an association response frame or the block-ACK frame.

In addition, according to an embodiment of the present disclosure, between the first STA and the second STA, for a block-ACK frame, information for at least one of a frame format based on the location of protection-related information or a range to which protection-related information is applied may be transmitted and received.

A method described in the example of FIG. 17 may be performed by the first device 100 of FIG. 1. In other words, the first STA of FIG. 17 may be implemented as the first device 100. For example, one or more processors 102 of the first device 100 of FIG. 1 may be configured to confirm key information related to protection for a block-ACK frame, receive a block-ACK frame to which protection is applied from the second STA and perform an integrity check on a block-ACK frame based on key information. In this regard, the first STA may recognize whether protection/security is applied to a received block-ACK frame based on information shared/negotiated in advance with the second STA, and may perform an integrity check by utilizing a BIP.

Furthermore, one or more memories 104 of the first device 100 may store instructions for performing a method described in the example of FIG. 17 or examples described below when being executed by one or more processors 102.

FIG. 18 is a diagram for describing an example of a method performed by the second STA according to the present disclosure.

Referring to FIG. 18, the second STA may confirm key information related to protection for a block-ACK frame S1810.

Herein, protection for a block-ACK frame may be based on an integrity check that utilizes a BIP described above in the present disclosure.

The second STA may configure a block-ACK frame including protection-related information for an integrity check for a block-ACK frame based on corresponding key information S1820.

The second STA may transmit a block-ACK frame to which the above-described protection is applied to the first STA S1830.

In this regard, when a block-ACK frame is indicated as a block-ACK type for a multi-STA, protection-related information for an integrity check may be included in a specific Per TID AID Info field among a plurality of Per TID AID Info fields included in a block-ACK information field within a corresponding block-ACK frame. As an example, a specific Per TID AID Info field may correspond to a Per TID AID Info field located last among a plurality of Per TID AID Info fields.

Since details for protection for a block-ACK frame, key information, the configuration of protection-related information, a specific configuration for a per AID TID info field including protection-related information and a subfield included therein, the calculation of an MIC value, etc. are identical/similar to those described in FIG. 17, a detailed description thereof is omitted.

A method described in the example of FIG. 18 may be performed by the second device 200 of FIG. 1. In other words, the second STA of FIG. 18 may be implemented as the second device 200. For example, one or more processors 202 of the second device 200 of FIG. 1 may be configured to confirm key information related to protection for a block-ACK frame, configure a block-ACK frame including protection-related information based on key information and transmit a block-ACK frame to which protection is applied to the first STA. In this regard, the second STA may perform an operation including information related to an integrity check (e.g., a derived MIC value, key information for deriving an MIC value, a packet number (PN) for a corresponding block-ACK frame, etc.) by applying a BIP to a block-ACK frame based on information shared with the first STA before configuring a PPDU.

Furthermore, one or more memories 204 of the second device 200 may store instructions for performing a method described in the example of FIG. 18 or examples described below when being executed by one or more processors 202.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in the present disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless local area network (WLAN) system, the method comprising:
confirming key information related to protection for a block acknowledgment (block-ACK) frame;
receiving a block-ACK frame to which the protection is applied from a second STA; and
based on the key information, performing an integrity check on the block-ACK frame,
wherein based on the block-ACK frame being indicated as a block-ACK type for a multi-STA, protection-related information for the integrity check is included in a specific Per TID AID Info field among a plurality of Per TID AID Info fields included in a block-ACK information field within the block-ACK frame.

2. The method of claim 1,
wherein an AID subfield included in the specific Per TID AID Info field is set as a pre-defined AID value to indicate whether the protection-related information is included.

3. The method of claim 2, wherein the pre-defined AID value is 2044.

4. The method of claim 1,
wherein a combination of a value of a TID subfield and a value of an ACK type subfield included in the specific Per TID AID Info field is set as a value indicating at least one of whether the protection-related information is present, whether one or more subfields included in the protection-related information are present, or a length of the one or more subfields included in the protection-related information.

5. The method of claim 1,
wherein one or more subfields included in the protection-related information include at least one of a first subfield related to the key information, a second subfield related to a packet number for the block-ACK frame, or a third subfield for MIC information for the integrity check.

6. The method of claim 5,
wherein the integrity check is performed based on a comparison between a first MIC value calculated for at least one of a block-ACK control field or the block-ACK information field within the block-ACK frame and a second MIC value indicated by the third subfield.

7. The method of claim 6,
wherein based on the block-ACK information field being applied to calculation of the first MIC value, the specific Per TID AID Info field is excluded from the calculation of the first MIC value.

8. The method of claim 1,
wherein at least one of an ACK type subfield or a TID subfield included in the specific Per TID AID Info field is set as a reserved value.

9. The method of claim 1,
wherein an ACK type subfield and a TID subfield included in the specific Per TID AID Info field are defined in a same manner as when a value of an AID subfield included in a Per TID AID Info field is not set as 2045.

10. The method of claim 1,
wherein the specific Per TID AID Info field includes a length-related subfield for indicating a length of a subfield corresponding to the protection-related information.

11. The method of claim 10,
wherein based on the length-related subfield being configured in a pre-defined block-ACK starting sequence control subfield format, the length-related subfield indicates:
the length of the subfield corresponding to the protection-related information, or
a sum of the length of the subfield corresponding to the protection-related information and a length of a padding or reserved subfield located after the protection-related information.

12. The method of claim 10,
wherein the specific Per TID AID Info field corresponds to a Per TID AID Info field located last among a plurality of Per TID AID Info fields.

13. The method of claim 1,
wherein between the first STA and the second STA, information representing whether the protection for the block-ACK frame is supported is transmitted and received, and
wherein the information is transmitted and received through at least one of a beacon frame, a probe request frame, a probe response frame, an association request frame, an association response frame, or the block-ACK frame.

14. The method of claim 1,
wherein between the first STA and the second STA, for the block-ACK frame, information for at least one of a frame format based on a location of the protection-related information or a range to which the protection-related information is applied is transmitted and received.

15. The method of claim 1,
wherein the protection for the block-ACK frame is based on an integrity check utilizing a broadcast/multicast integrity protocol (BIP).

16. A first station (STA) device in a wireless local area network (WLAN) system, the device comprising:
one or more transceivers; and
one or more processors connected to the one or more transceivers,
wherein the one or more processors are configured to:
confirm key information related to protection for a block acknowledgment (block-ACK) frame;
receive a block-ACK frame to which the protection is applied from a second STA; and
based on the key information, perform an integrity check on the block-ACK frame,
wherein based on the block-ACK frame being indicated as a block-ACK type for a multi-STA, protection-related information for the integrity check is included in a specific Per TID AID Info field among a plurality of Per TID AID Info fields included in a block-ACK information field within the block-ACK frame.

17. A method performed by a second station (STA) in a wireless local area network (WLAN) system, the method comprising:
confirming key information related to protection for a block-ACK frame;
based on the key information, configuring a block-ACK frame including protection-related information for an integrity check on the block-ACK frame; and
transmitting a block-ACK frame to which the protection is applied to a first STA,
wherein based on the block-ACK frame being indicated as a block-ACK type for a multi-STA, the protection-related information is included in a specific Per TID AID Info field among a plurality of Per TID AID Info fields included in a block-ACK information field within the block-ACK frame.

18. A second station (STA) device in a wireless local area network (WLAN) system, the device comprising:
one or more transceivers; and
one or more processors connected to the one or more transceivers,
wherein the one or more processors are configured to:
confirm key information related to protection for a block-ACK frame;
based on the key information, configure a block-ACK frame including protection-related information for an integrity check on the block-ACK frame; and
transmit a block-ACK frame to which the protection is applied to a first STA,
wherein based on the block-ACK frame being indicated as a block-ACK type for a multi-STA, the protection-related information is included in a specific Per TID AID Info field among a plurality of Per TID AID Info fields included in a block-ACK information field within the block-ACK frame.

19. A processing device configured to control a station (STA) in a wireless local area network (WLAN) system, the processing device comprising:
one or more processors; and
one or more computer memories operatively connected to the one or more processors, and based on being executed by the one or more processors, storing instructions for performing a method according to any one of claim 1 to claim 15.

20. One or more non-transitory computer-readable media for storing one or more instructions, wherein:
the one or more instructions are executed by one or more processors to control a device to perform a method according to any one of claim 1 to claim 15 in a wireless local area network system.
